# FASCICULE DE BREVET EUROPEEN

(11) **EP 3 194 142 B1**
(45) Date de publication et mention de la délivrance du brevet: **12.09.2018**
(21) Numéro de dépôt: 15754267.1
(22) Date de dépôt: 17.07.2015
(51) Int. Cl.: B29C 49/42, B29C 49/58, B29C 49/78, F16K 3/26

(54) **VANNE POUR UNE MACHINE DE FABRICATION DE RÉCIPIENTS EN MATIÈRE PLASTIQUE AU MOYEN D'UN FLUIDE HAUTE PRESSION**
VENTIL FÜR EINE MASCHINE ZUR HERSTELLUNG VON KUNSTSTOFFBEHÄLTERN MITTELS EINER HOCHDRUCKFLÜSSIGKEIT
VALVE FOR A MACHINE FOR MANUFACTURING PLASTIC CONTAINERS BY MEANS OF A HIGH-PRESSURE FLUID

(30) Priorité: 28.08.2014 FR 1458062
(43) Date de publication de la demande: 26.07.2017
(73) Titulaire: Sidel Participations, 76930 Octeville-sur-Mer (FR)
(72) Inventeur: LEMBLE, Thierry, F-76930 Octeville-sur-Mer (FR)
(74) Mandataire: Grassin d'Alphonse, Emmanuel Jean Marie
(86) Numéro de dépôt international: PCT/FR2015/051978
(87) Numéro de publication internationale: WO 2016/030593

(56) Documents cités:
- EP-A1- 2 335 904
- EP-A2- 0 838 596
- DE-A1- 10 240 252

## Description

La présente invention concerne une vanne pour une machine de fabrication de récipients en matière plastique au moyen d'un fluide haute pression.

La présente invention concerne plus particulièrement une vanne pour une machine de fabrication de récipients en matière plastique à partir de préformes mises en volume dans un moule, par soufflage ou par étirage-soufflage, au moyen d'au moins un fluide haute pression, ladite vanne comportant au moins :
- une entrée reliée à une source de fluide haute pression et une sortie qui sont mises en communication sélectivement à travers un corps de vanne comportant un alésage interne dans lequel coulisse axialement un obturateur,
- une chambre de commande de l'obturateur délimitée axialement par une face principale de l'obturateur et alimentée avec un fluide de pilotage pour provoquer le coulissement axial dudit obturateur dans l'alésage entre au moins une première position de fermeture et une deuxième position d'ouverture de la vanne,
- des moyens de guidage de l'obturateur comportant au moins une partie qui pénètre axialement à l'intérieur dudit obturateur.

On connaît de l'état de la technique de telles vannes, notamment destinées à équiper une machine de fabrication de récipients, en particulier de bouteilles en matière plastique comme le PET.

Pour une telle machine de fabrication (encore appelée « souffleuse »), on cherche tout particulièrement à augmenter les cadences de fabrication, lesquelles cadences sont susceptibles selon les applications d'atteindre des valeurs allant jusqu'à 100.000 récipients par heure.

Cependant, l'augmentation des cadences s'accompagne de contraintes techniques qui sont de plus en plus fortes, en particulier pour la commande du procédé de soufflage (ou d'étirage-soufflage) des préformes chaudes dans lequel le choix d'un type donné de vanne en fonction des caractéristiques de fonctionnement revêt une grande importance.

Dans les caractéristiques de fonctionnement d'une vanne, la rapidité de commutation entre les positions ouverte et fermée est déterminante pour la durée du cycle de soufflage.

Ceci est encore plus vrai lorsque le procédé de soufflage comporte une étape finale de récupération du fluide de soufflage, laquelle étape de récupération a généralement pour but de réutiliser ultérieurement le fluide récupéré, par exemple dans une étape de pré-soufflage et/ou dans une étape de soufflage.

Il est ainsi connu d'utiliser des électrovannes dont la commande électrique a permis jusqu'à aujourd'hui de soutenir les cadences élevées précitées mais dont l'encombrement et le coût demeurent des inconvénients qui leurs font parfois préférer des vannes à commande électropneumatique pilotées au moyen d'un fluide sous pression, plus compactes et rapides.

Le document EP-A1-2.335.904 décrit et représente un exemple de réalisation d'une vanne pour une machine de fabrication de récipients en matière plastique par soufflage de préformes au moyen d'un fluide haute pression.

Une vanne selon les enseignements de ce document ne donne cependant pas entière satisfaction, en particulier en raison du temps de réponse nécessaire au déplacement de l'obturateur (ou tiroir) entre les positions fermée et ouverte de la vanne.

Les temps de réponse d'une telle vanne utilisée dans une machine de fabrication de récipients par soufflage demeurent un obstacle à l'obtention de cadences plus élevées.

Les perfectionnements apportés à de telles vannes selon notamment les enseignements du document EP-A1-2.335.904 n'ont, de manière surprenante, pas permis une amélioration significative du temps de réponse.

La présente invention a tout d'abord consisté à identifier les raisons pour lesquelles le temps de réponse des vannes connues demeurait important puis, le problème technique identifié, à trouver une nouvelle conception de vanne permettant de le résoudre.

On a représenté aux figures 1 à 3, une vanne 5 conforme aux enseignements du document EP-A1-2.335.904 pour expliquer les raisons pour lesquelles le temps de réponse de telles vannes demeure important.

On décrira tout d'abord une telle vanne 5.

La vanne 5 comporte une entrée 12 qui est reliée à une source de fluide haute pression, ci-après dénommé le fluide de soufflage, et une sortie 14.

L'entrée 12 et la sortie 14 de la vanne 5 sont mises en communication sélectivement à travers un corps 16 de vanne comportant un alésage 18 interne dans lequel un obturateur 20 coulisse axialement suivant un axe X principal.

La vanne 5 comporte une chambre 22 de commande de l'obturateur 20 qui est notamment délimitée axialement par une face 24 principale de l'obturateur 20.

La chambre 22 de commande est destinée à être alimentée par au moins un orifice 26 d'admission avec un fluide, dit de pilotage, pour provoquer le coulissement axial dudit obturateur 20 dans l'alésage 18, respectivement entre au moins une première position de fermeture de la vanne et une deuxième position d'ouverture de la vanne.

Le fluide de pilotage comme le fluide de soufflage consiste généralement en de l'air sous pression, dit « basse pression » pour le premier et « haute pression » pour le second.

La pression du fluide de pilotage est inférieure à la pression du fluide de soufflage, à titre d'exemples non limitatifs la pression du fluide de pilotage est d'environ 8 bars tandis que la pression du fluide de soufflage peut atteindre des valeurs de 30 à 40 bars selon les applications.

La vanne 5 comporte des moyens 28 de guidage de l'obturateur comportant au moins une partie qui pénètre axialement à l'intérieur dudit obturateur 20.

La vanne 5 comporte des moyens 30 de rappel de l'obturateur 20 vers la première position de fermeture de la vanne, lesdits moyens de rappel étant constitués par une chambre 30 de rappel apte à être alimentée par au moins un orifice 32 d'alimentation en fluide sous pression.

L'obturateur 20 comporte d'une part la face 24 principale délimitant axialement la chambre 22 de commande à volume variable et correspondant à une section active A1 et, d'autre part, une face secondaire 34 délimitant axialement la chambre 30 de rappel et correspondant à une section active A2, inférieure à la section active A1.

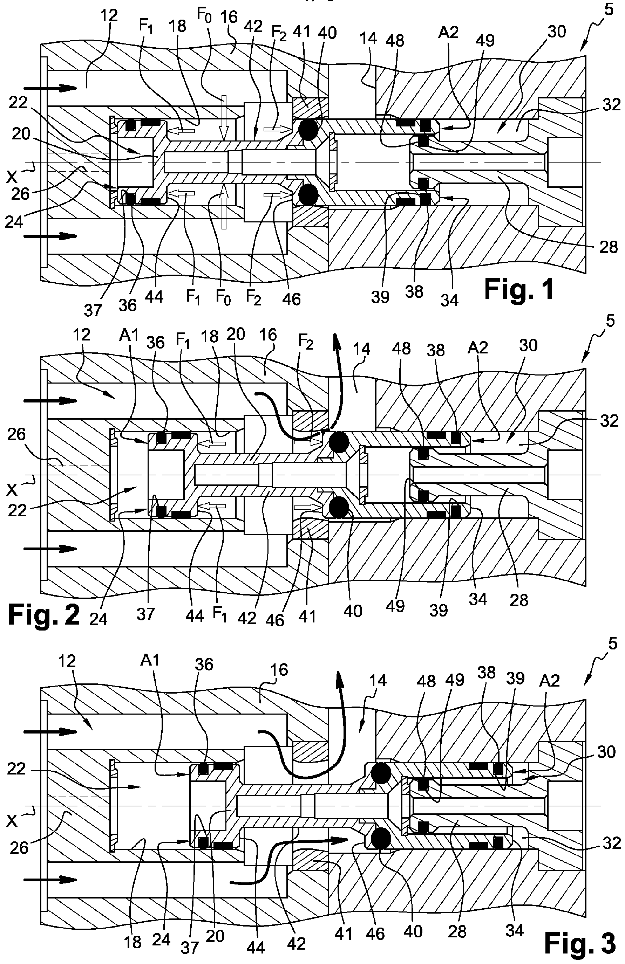

La chambre 22 de commande et la chambre 30 de rappel de l'obturateur 20 sont respectivement alimentées en fluide de pilotage. La mise en pression de la chambre 22 de commande provoque le déplacement axial de l'obturateur 20 entre lesdites première position de fermeture (figure 1) et deuxième position d'ouverture (figure 3) de la vanne.

La vanne 5 comporte différents moyens d'étanchéité qui sont respectivement portés par l'obturateur 20 coulissant dans l'alésage 18 interne du corps 16 de vanne entre lesdites première position de fermeture et deuxième position d'ouverture.

Dans l'exemple des figures 1 à 3, la vanne 5 comporte des premiers moyens d'étanchéité associés à la chambre 22 de commande et formés par exemple par au moins un joint 36 annulaire qui est monté dans une gorge 37 de l'obturateur 20.

La vanne 5 comporte des deuxièmes moyens d'étanchéité associés à la chambre 30 de rappel et formés par exemple par au moins un joint 38 monté dans une gorge 39 de l'obturateur 20.

Les deuxièmes moyens d'étanchéité associés à la chambre 30 de rappel comportent un joint 48 qui est monté dans une gorge 49 de ladite au moins une partie des moyens 28 de guidage qui pénètre axialement à l'intérieur de l'obturateur 20.

Le joint 38 coopère avec l'alésage 18 du corps 16 de vanne et le joint 48 coopère avec la surface interne de l'obturateur 20.

La vanne 5 comporte des moyens 40 d'étanchéité, dits principaux, pour assurer une étanchéité au fluide de soufflage à haute pression entre l'entrée 12 et la sortie 14 de la vanne lorsque l'obturateur 20 occupe la première position de fermeture de la vanne représentée sur la figure 1.

Les moyens 40 d'étanchéité de la vanne 5 comportent au moins un joint 40 qui coopère radialement avec une bague 41 pour interrompre la circulation du fluide de soufflage entre l'entrée 12 et la sortie 14 lorsque l'obturateur 20 occupe la première position de fermeture de la vanne.

La source de fluide de soufflage à haute pression alimente en permanence l'entrée 12 de la vanne 5, tel que représenté schématiquement sous la forme de flèches.

Lorsque l'obturateur 20 occupe la première position de fermeture de la vanne représentée à la figure 1, le fluide de soufflage à haute pression applique alors une force sur l'ensemble de la surface externe de l'obturateur 20 qui, en amont du joint 40, se trouve en communication avec l'entrée 12.

La surface externe de l'obturateur 20 présente globalement une forme en « U » qui détermine la section de passage du fluide de soufflage vers la sortie 14 lorsque ledit obturateur 20 occupe la deuxième position d'ouverture représentée sur la figure 3.

Dans la deuxième position d'ouverture représentée sur la figure 3, le fluide de soufflage circule axialement entre l'entrée 12 et la sortie 14 en passant radialement à l'extérieur de l'obturateur 20, entre la surface externe de l'obturateur 20 et la surface interne de la bague 41 portée par le corps 16 de vanne.

Dans l'exemple de réalisation représenté sur les figures 1 à 3, ladite surface externe comporte principalement une surface 42 cylindrique qui s'étend axialement, parallèlement à l'axe X, entre une surface 44 distale et une surface 46 proximale.

Les surfaces 44 et 46 sont respectivement des surfaces qui sont globalement orthogonales à l'axe X suivant lequel l'obturateur 20 se déplace lors de la course d'ouverture de la vanne 5 illustrée par les figures 1 à 3, autrement dit et par comparaison à la surface 42, lesdites surfaces 44 et 46 ne sont pas parallèles audit axe X.

Tel qu'expliqué précédemment en préambule, on cherche des solutions pour réduire encore et toujours le temps de réponse des vannes utilisées dans une machine de fabrication de récipients, telles que la vanne 5 notamment.

Pour le temps de réponse d'une telle vanne 5, la Demanderesse a constaté que, contrairement à ce que l'on était en droit d'attendre, l'augmentation de la pression utilisée pour le fluide de pilotage ne permettait, en proportion, que peu ou pas de réduction du temps de réponse de la vanne.

Selon la Demanderesse, l'explication tient au fait que lorsque l'ouverture de la vanne 5 est commandée en mettant sous pression la chambre 22 de commande, l'obturateur 20 est soumis dans sa course d'ouverture à un phénomène particulier dénommé par elle « phénomène de frein » et explicité ci-après.

Suivant ce « phénomène de frein », la course d'ouverture de l'obturateur 20 débute très brièvement mais marque rapidement un arrêt (ou à tout le moins un net ralentissement), avant ensuite de reprendre sa course jusqu'à atteindre la deuxième position d'ouverture de la vanne 5.

La Demanderesse a également constaté que le temps de réponse à l'ouverture de la vanne 5 était de manière surprenante supérieur à celui nécessaire à la fermeture et qu'a contrario aucun phénomène de frein ne se produisait lors de la fermeture de la vanne.

La Demanderesse a alors recherché et su trouver l'origine dudit « phénomène de frein » survenant lors de la course d'ouverture de l'obturateur 20.

Des essais lui ont en particulier permis de démontrer que le phénomène de frein survenait, uniquement à l'ouverture, lorsqu'un différentiel de pression existait entre l'entrée 12 et la sortie 14.

Lorsqu'une telle vanne 5 est utilisée pour procéder au soufflage dans une machine de fabrication de récipients, la pression à laquelle se trouve la sortie 14 de la vanne correspond globalement à la pression atmosphérique tandis que la pression en entrée 12 correspond à celle du fluide de soufflage, soit une haute pression.

Le phénomène de frein constaté est d'autant plus important que la valeur de la pression du fluide de soufflage est importante car la différence de pression entre l'entrée et la sortie est plus importante.

Selon la Demanderesse, le phénomène de frein a pour origine un déséquilibre dans les forces exercées par le fluide de soufflage sous pression et qui survient lorsque l'obturateur 20 débute sa course d'ouverture.

L'entrée 12 étant reliée à la source de fluide de soufflage et l'obturateur 20 dans la première position de fermeture, ledit fluide de soufflage applique une force uniforme sur les différentes surfaces de l'obturateur 20 avec lesquelles ledit fluide est en contact.

Cependant si l'entrée 12 n'est pas alimentée en fluide de soufflage mais mise à l'air libre, soit à la pression atmosphérique comme la sortie 14, on constate la disparition dudit phénomène de frein jusqu'alors observé dans les conditions normales d'utilisation de la vanne 5 dans une machine.

Pour le besoin des explications, on a référencé ci-après la force appliquée par le fluide de soufflage à haute pression selon la partie de la surface externe de l'obturateur 20 sur laquelle ladite force s'exerce, lesdites forces étant représentées schématiquement par des flèches F sur les figures 1 à 3.

Par convention, la force F1 correspond à la force s'appliquant axialement sur la surface 44 distale, la force F2 correspond à la force s'appliquant axialement sur la surface 46 proximale, et la force F0 correspond à la force s'appliquant sur la surface 42 cylindrique externe.

La force F0 étant orthogonale à l'axe X et la direction axiale de déplacement de l'obturateur 20, la force F0 n'affecte pas le coulissement axial de l'obturateur 20 entre lesdites positions de fermeture et d'ouverture de la vanne 5.

Dans la première position de fermeture représentée à la figure 1, les forces F1 et F2 d'orientation axiale s'équilibrent, l'obturateur 20 occupe la première position de fermeture vers laquelle l'obturateur 20 est rappelé automatiquement par les moyens 30 de rappel.

La chambre 30 de rappel est alimentée par l'orifice 32 d'admission en fluide de pilotage, ledit fluide de pilotage appliquant sur la face 34 secondaire de section A2 un effort de rappel qui sollicite l'obturateur 20 vers la première position de fermeture.

L'obturateur 20 demeure dans la première position de fermeture tant que n'est pas appliqué sur la face 24 principale un effort qui soit supérieur audit effort de rappel.

Pour procéder à l'ouverture de la vanne 5, la chambre 30 de commande est alimentée en fluide de pilotage jusqu'à l'application d'un effort de commande qui, supérieur à l'effort de rappel, provoque le coulissement axial de l'obturateur 20 vers la deuxième position d'ouverture de la vanne 5.

On a représenté à la figure 2, la position de l'obturateur 20 au tout début de la course d'ouverture. Dès lors que l'obturateur 20 est déplacé axialement, l'étanchéité assurée jusqu'alors par le joint 40 n'est plus et la communication entre l'entrée 12 et la sortie 14 s'établit progressivement.

Or, l'ouverture de la communication va rompre l'équilibre qui existait jusqu'alors entre les forces F1 et F2 s'appliquant axialement en sens opposé, respectivement sur la face 44 distale et la face 46 proximale, non parallèles à l'axe X.

La force F2 va décroître du fait de la différence de pression existant entre la sortie 14, qui est à la pression atmosphérique, et l'entrée 12 se trouvant une pression correspondant à la pression du fluide de soufflage.

Cependant et contrairement à la force F2, la force F1 demeure peu affectée initialement par la différence de pression survenant lors de l'ouverture. La force F2 devient inférieure à la force F1 créant un déséquilibre tel que la force F1 va alors s'opposer au coulissement axial de l'obturateur 20.

Le déséquilibre entre les forces F1 et F2 lors de l'ouverture se produit pendant un laps de temps suffisant pour provoquer le « phénomène de frein » décrit précédemment.

Le phénomène de frein disparaît lorsque la pression à la sortie 14 atteint la pression du fluide de soufflage, en l'absence de déséquilibre de pression les forces F1 et F2 se neutralisent à nouveau.

La Demanderesse a pu observer que le « phénomène de frein » est d'autant plus marqué que la force F2 s'applique sur une face 44 distale qui est éloignée axialement de la zone dans laquelle s'établit la communication entre l'entrée 12 et la sortie 14, soit la zone dans laquelle se trouve également la face 46 proximale.

Tel que représenté sur la figure 2, l'obturateur 20 subit le « phénomène de frein » au début de sa course d'ouverture puis lorsque la pression de soufflage s'établit de manière uniforme entre l'entrée 12 et la sortie 14, le déséquilibre entre les forces F1 et F2 cesse, et l'obturateur 20 coulisse alors jusqu'à atteindre la deuxième position d'ouverture représentée à la figure 3.

Le but de la présente invention est notamment de résoudre les inconvénients précités de l'état de la technique, en particulier de proposer une vanne présentant à tout le moins un « phénomène de frein » réduit afin d'en améliorer le temps de réponse.

Dans ce but, la vanne du type décrit précédemment est caractérisée en ce que l'obturateur est formé par une pièce tubulaire à l'intérieur de laquelle le fluide haute pression est introduit axialement et qui comporte au moins une ouverture radiale de passage traversée par ledit fluide haute pression lorsque ledit obturateur occupe ladite deuxième position d'ouverture de la vanne.

Dans une vanne selon l'invention, le fluide haute pression est introduit axialement à l'intérieur dudit obturateur de forme tubulaire comportant au moins une ouverture radiale de passage que ledit fluide traverse lorsque ledit obturateur occupe la deuxième position d'ouverture de la vanne.

Grâce à une telle conception tubulaire, l'obturateur de la vanne présente des surfaces non parallèles à l'axe X qui sont avantageusement très réduites.

Avantageusement, l'obturateur de la vanne est conformé de manière à réduire au maximum lesdites surfaces qui, équivalentes aux surfaces distale et proximale, sont globalement orthogonales au sens axial de déplacement de l'obturateur suivant l'axe X.

Avantageusement, les moyens d'étanchéité ne sont pas portés par l'obturateur afin de réduire l'épaisseur de la pièce tubulaire formant l'obturateur.

Avantageusement, la forme géométrique de ladite au moins une ouverture de passage est déterminée pour réduire lesdites surfaces globalement orthogonales (ou normales) à l'axe X sur lesquelles s'exercent les forces de pression à l'origine du phénomène de frein.

De préférence, ladite au moins une ouverture de passage comporte un bord dont les parties axialement opposées présentent une forme curviligne, par exemple circulaire, de manière à réduire lesdites surfaces globalement orthogonales (ou normales) à l'axe X.

Avantageusement, la forme de ladite au moins une ouverture de passage, avec ou sans chanfrein, facilite le passage des moyens d'étanchéité, dits principaux.

Avantageusement, la réduction des surfaces globalement orthogonales sur l'obturateur permet de réduire, voire de supprimer, le « phénomène de frein » précité survenant jusqu'alors au moment de l'ouverture, et par conséquent d'améliorer très significativement le temps de réponse de la vanne.

En effet, l'obturateur d'une vanne selon l'invention coulisse plus rapidement à l'ouverture, avec une vitesse linéaire plus constante en raison de la forte diminution voir l'absence de « phénomène de frein ».

Par comparaison, l'obturateur n'est plus soumis à un arrêt ou ralentissement que provoquait, dans une vanne de l'état de la technique, la différence des forces que les pressions statiques appliquaient sur les surfaces distale et proximale de l'obturateur lors de la phase transitoire d'ouverture, de la position fermée vers la position ouverte de la vanne.

Dans une vanne selon l'invention, il n'est pas nécessaire de chercher à compenser le phénomène de frein, la force à appliquer par le fluide sous pression introduit dans la chambre de commande pour provoquer le déplacement de l'obturateur est donc plus faible et plus constante durant la course d'ouverture entre lesdites positions fermée et ouverte de la vanne.

Avantageusement, la réduction du temps de réponse d'une vanne selon l'invention peut permettre de diminuer la pression du fluide de pilotage utilisé au moins pour la commander.

Par comparaison avec une vanne selon les figures 1 à 3 dans laquelle les forces du fluide haute pression s'appliquent sur une partie de l'obturateur, les forces appliquées par le fluide haute pression introduit axialement à l'intérieur de l'obturateur tubulaire d'une vanne selon l'invention sont reprises par le corps de vanne à travers les moyens de guidage, sans solliciter mécaniquement l'obturateur.

Avantageusement, ladite au moins une ouverture radiale ménagée dans l'obturateur tubulaire pour le passage vers la sortie du fluide de soufflage sous haute pression est conformée pour réduire et simplifier le parcours suivi par ledit fluide de soufflage entre l'entrée et la sortie de la vanne.

Le fluide de soufflage haute pression n'effectue notamment pas dans une vanne selon l'invention de parcours sinueux, tel que celui suivi auparavant avec la chicane présente au niveau de la bague d'étanchéité dans une vanne selon les figures 1 à 3.

Avantageusement, la proximité entre les surfaces distale et proximale, axialement opposées, de ladite au moins une ouverture radiale de l'obturateur participe également à la réduction dudit « phénomène de frein ».

Selon d'autres caractéristiques de l'invention :
- l'entrée comporte un insert qui est solidaire d'une extrémité axiale du corps de vanne et comporte au moins une partie axiale qui pénètre axialement à l'intérieur dudit obturateur ;
- ladite partie axiale de l'insert est conformée en une douille dont une face cylindrique interne délimite radialement au moins un canal central d'alimentation en fluide haute pression et dont une face cylindrique externe constitue une surface de guidage axial avec laquelle coopère de manière étanche une partie axiale de l'obturateur ;
- la vanne comporte des moyens d'indexation angulaire de l'obturateur par rapport au corps de vanne de manière que ladite au moins une ouverture radiale de passage et la sortie soient radialement alignées l'une avec l'autre lorsque l'obturateur occupe axialement ladite deuxième position d'ouverture ;
- ladite au moins une partie axiale des moyens de guidage de l'obturateur est un noyau comportant une face convexe conformée pour dévier radialement le fluide haute pression vers la sortie ;
- la vanne comporte des moyens de rappel de l'obturateur qui sont formés par une chambre de rappel alimentée en fluide de pilotage de manière à rappeler automatiquement ledit obturateur vers la première position de fermeture de la vanne ;
- ladite chambre de rappel est délimitée par une face secondaire de l'obturateur, axialement opposée à ladite face principale de l'obturateur délimitant la chambre de commande ;
- la face principale de l'obturateur associée à la chambre de commande présente une section active qui est supérieure à la section active de la face secondaire de l'obturateur associée à la chambre de rappel ;
- le corps de vanne est constitué par un tube pour former une vanne-cartouche qui est destinée à être introduite dans un logement complémentaire d'un bloc d'une machine de fabrication de récipients ;
- le tube formant le corps de vanne comporte des gorges annulaires qui, ménagées dans une surface cylindrique externe du corps de vanne, sont destinées au montage de moyens d'étanchéité pour assurer les étanchéités entre ladite vanne-cartouche et une paroi cylindrique interne du logement du bloc.

D'autres caractéristiques et avantages de l'invention apparaîtront à la lecture de la description qui va suivre pour la compréhension de laquelle on se reportera aux dessins annexés dans lesquels :
- les figures 1 à 3 sont des vues en coupe axiale qui représentent une vanne selon l'état de la technique et qui illustrent respectivement l'obturateur en position fermée, intermédiaire et ouverte de la vanne ;
- les figures 4 à 6 sont des vues en coupe axiale qui représentent une vanne selon un premier mode de réalisation de l'invention et qui, comme les figures 1 à 3, illustrent respectivement l'obturateur en position fermée, intermédiaire et ouverte de la vanne ;
- la figure 7 est une vue en perspective qui représente une vanne-cartouche selon un deuxième mode de réalisation de l'invention et qui illustre ladite vanne-cartouche montée dans un logement d'un bloc équipant une machine de fabrication de récipients ;
- les figures 8 à 10 sont des vues en coupe axiale qui représentent une vanne-cartouche selon le deuxième mode de réalisation de la figure 7 et qui illustrent respectivement l'obturateur en position fermée, intermédiaire et ouverte de la vanne.

Dans la suite de la description, on utilisera à titre non limitatif les termes « interne » et « externe » en référence à la direction radiale, orthogonale à l'axe X déterminant une direction axiale, et les termes « proximale » et « distale » selon la distance axiale existant entre l'élément désigné et la sortie de la vanne et « avant » et « arrière » par convention.

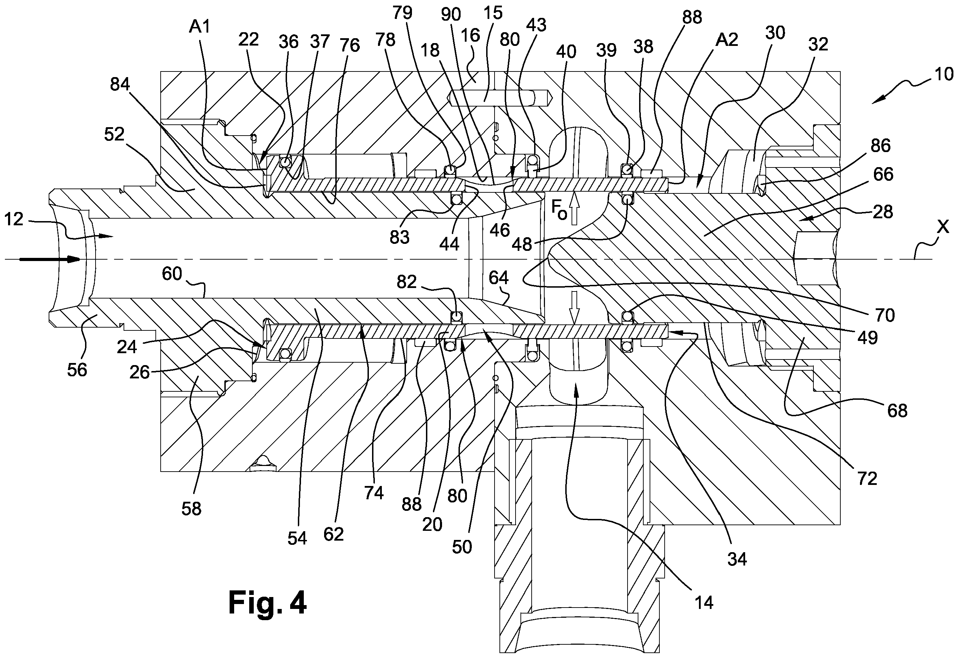

On décrira ci-après un premier mode de réalisation d'une vanne 10 selon l'invention qui est illustrée aux figures 4 à 6.

Dans la description qui suit de la vanne 10, les références communes avec la vanne 5 de l'état de la technique selon les figures 1 à 3 décrites précédemment, désignent des éléments identiques ou ayant une fonction similaire.

La vanne 10 est destinée à équiper une machine (non représentée) de fabrication de récipients en matière plastique.

La fabrication de récipients dans une telle machine est réalisée à partir de préformes chaudes qui sont mises en volume dans un moule, par soufflage ou par étirage-soufflage, au moyen d'au moins un fluide haute pression.

La vanne 10 comporte au moins une entrée 12 qui est reliée à au moins une source de fluide haute pression, dit fluide de soufflage, pour la transformation par soufflage de la préforme en un récipient.

La vanne 10 comporte au moins une sortie 14 pour le fluide de soufflage, lesdites entrée 12 et sortie 14 étant mises en communication sélectivement à travers un corps 16 de vanne.

Dans ce premier mode de réalisation, le corps 16 de vanne est réalisé en deux parties assemblées par l'intermédiaire de moyens 15 de liaison, la réalisation en deux parties étant notamment destinée à permettre le montage d'éléments tels que des moyens d'étanchéité.

Le corps 16 de vanne comporte un alésage 18 interne dans lequel coulisse axialement un obturateur 20 suivant l'axe X.

La vanne 10 comporte une chambre 22 de commande de l'obturateur 20 qui est délimitée axialement par une face 24 principale de l'obturateur et alimentée, par au moins un orifice 26 d'admission, avec un fluide de pilotage.

La mise en pression de la chambre 22 de commande provoque le coulissement axial dudit obturateur 20 dans l'alésage 18 du corps 16 de vanne.

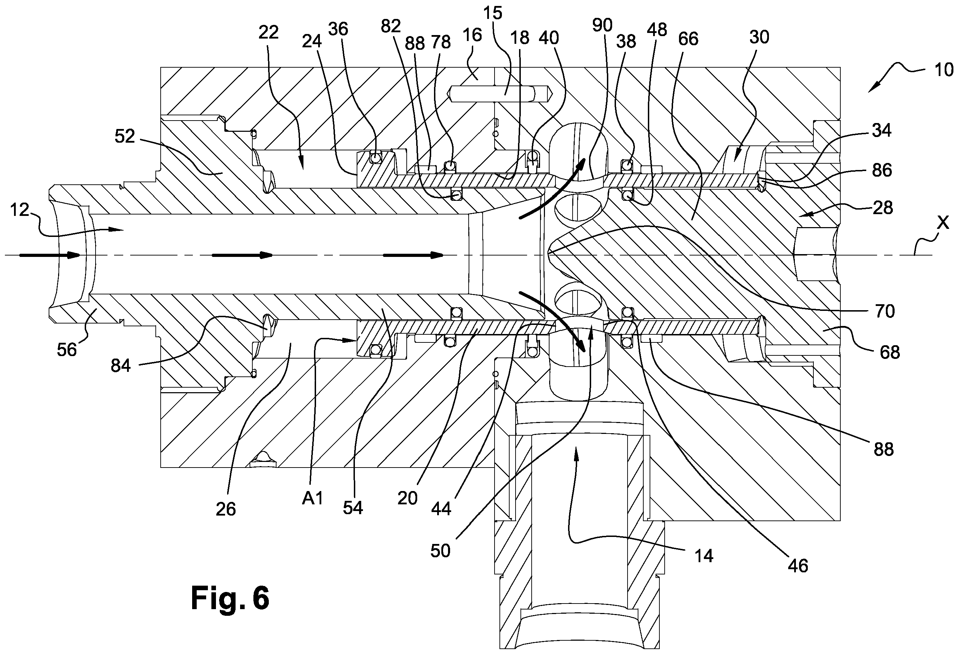

L'obturateur 20 coulisse axialement entre au moins une première position de fermeture et une deuxième position d'ouverture de la vanne, respectivement représentées sur les figures 4 et 6.

La première position de fermeture de la vanne 10 correspond à une position dans laquelle l'obturateur 20 interrompt la circulation du fluide haute pression entre l'entrée 12 et la sortie 14.

La deuxième position d'ouverture de la vanne 10 correspond à une position dans laquelle l'obturateur 20 autorise la circulation du fluide haute pression entre l'entrée 12 et la sortie 14.

De préférence, la vanne 10 comporte des moyens 28 de guidage de l'obturateur 20.

Avantageusement, au moins une partie des moyens 28 de guidage est conformée pour pénétrer axialement à l'intérieur dudit obturateur 20.

La vanne 10 comporte des moyens 30 de rappel de l'obturateur 20 pour rappeler automatiquement ledit obturateur 20 vers la première position de fermeture.

La mise en pression de la chambre 22 de commande est destinée à commander l'ouverture de la vanne 10, la fermeture étant avantageusement obtenue automatiquement par l'intermédiaire des moyens 30 de rappel et en cessant d'alimenter la chambre 22 de commande en fluide basse pression, dit fluide de pilotage.

De préférence, les moyens 30 de rappel sont formés par une chambre 30 de rappel qui est apte à être alimentée avec un fluide basse pression par l'intermédiaire d'au moins un orifice 32 d'admission.

Avantageusement, le fluide basse pression utilisé pour mettre ladite chambre 30 de rappel sous pression est constitué par le même fluide pilotage que celui utilisé dans la chambre 22 de commande.

De préférence, le fluide de pilotage est constitué par de l'air, par exemple de l'air basse pression telle qu'une pression de l'ordre de 8 bars.

En variante, le fluide de pilotage est constitué par un fluide incompressible, par exemple de l'eau ou de l'huile.

La chambre 30 de rappel est délimitée par une face 34 secondaire de l'obturateur 20, axialement opposée à ladite face 24 principale de l'obturateur délimitant la chambre 22 de commande.

La face 24 principale de l'obturateur 20 associée à la chambre 22 de commande présente une section active A1 qui est supérieure à la section active A2 de la face 34 secondaire de l'obturateur 20 associée à la chambre 30 de rappel.

L'étanchéité de la chambre 22 de commande est assurée par l'intermédiaire de premiers moyens d'étanchéité.

Dans ce premier mode de réalisation, les premiers moyens d'étanchéité comportent au moins un joint 36 qui est monté dans une gorge 37 de l'obturateur 20 ouverte radialement vers l'extérieur.

L'étanchéité de la chambre 30 de rappel est assurée par l'intermédiaire de deuxièmes moyens d'étanchéité.

Dans ce premier mode de réalisation, les deuxièmes moyens d'étanchéité comportent au moins un joint 38 qui est monté dans une gorge 39 du corps 16 de vanne.

L'obturateur 20 est formé par une pièce tubulaire à l'intérieur de laquelle le fluide de soufflage sous haute pression est introduit axialement, selon la flèche représentée sur les figures 4 à 6.

L'obturateur 20 comporte au moins une ouverture 50 radiale de passage qui est traversée sélectivement par le fluide de soufflage en fonction de la position occupée par ledit obturateur 20.

Lorsque l'obturateur 20 occupe la première position de fermeture de la vanne (figure 1), le fluide de soufflage introduit à l'intérieur de la pièce tubulaire formant l'obturateur 20 est isolé de la sortie 14 par des moyens 40 d'étanchéité.

Lorsque l'obturateur 20 occupe la deuxième position d'ouverture de la vanne, ledit fluide de soufflage sous haute pression circule jusqu'à la sortie 14 en traversant ladite au moins une ouverture 50 radiale de passage.

Dans ce premier mode de réalisation représenté sur les figures 4 à 6, l'entrée 12 de la vanne 10 comporte un insert 52 pour le raccordement de la vanne à la source de fluide de soufflage à haute pression.

L'insert 52 est solidaire d'une des extrémités du corps 16 de vanne, axialement opposée aux moyens 28 de guidage.

L'insert 52 comporte au moins une partie 54 avant qui pénètre axialement à l'intérieur dudit obturateur 20. L'insert 52 comporte une partie 56 arrière de raccordement qui fait par exemple axialement saillie par rapport au corps 16 de vanne.

L'insert 52 comporte une collerette 58 radiale qui est interposée axialement entre ladite partie 56 arrière de raccordement et ladite partie 54 avant et qui comporte sur sa surface externe un filetage pour la fixation par vissage de l'insert 52 avec le corps 16 de vanne.

La partie 54 avant de l'insert 52 constitue une douille dont une face 60 cylindrique interne délimite radialement au moins un canal central d'alimentation de la vanne 10 en fluide de soufflage haute pression.

La douille 54 comporte une face 62 cylindrique externe qui constitue une surface de guidage axial avec laquelle coopère de manière étanche une partie axiale arrière de l'obturateur 20.

Avantageusement, l'extrémité axiale avant de la douille 54 comporte une portion 64 de surface interne évasée, présentant par exemple une forme tronconique, pour guider le fluide de soufflage haute pression en sortie.

La sortie 14 de la vanne 10 comporte au moins un orifice de sortie ménagé radialement à travers le corps 16 de vanne et avec lequel ladite ouverture 50 radiale de l'obturateur 20 communique lorsque ledit obturateur 20 occupe axialement ladite deuxième position d'ouverture de la vanne.

Les moyens 28 de guidage de l'obturateur 20 comportent au moins une partie axiale arrière formant un noyau 66 qui pénètre axialement à l'intérieur dudit obturateur 20, à l'opposé axialement de l'insert 52.

De préférence, la partie 68 axiale avant forme une collerette munie sur sa surface externe d'un filetage pour assurer une fixation par vissage avec une partie complémentaire filetée du corps 16 de vanne.

Le noyau 66 comporte une face 70 arrière convexe qui présente centralement un bossage de manière à former un déflecteur pour le fluide de soufflage.

Avantageusement, la face 70 du noyau 66 est apte à dévier radialement vers la sortie 14, le fluide haute pression introduit axialement à l'opposé à l'intérieur de l'obturateur 20, par le canal central d'alimentation de l'insert 52.

Le noyau 66 comporte une face 72 cylindrique externe qui coopère avec l'extrémité axiale avant de l'obturateur 20 à l'intérieur duquel pénètre ledit noyau 66.

L'obturateur 20 tubulaire comporte une face 74 cylindrique externe et une face 76 cylindrique interne.

L'obturateur 20 coulisse axialement dans le corps 16 de vanne avec l'alésage 18 duquel il coopère par au moins une partie de sa face 74 cylindrique externe.

L'obturateur 20 coopère par sa face 76 cylindrique interne, d'une part, axialement à l'arrière avec la face 62 de l'insert 52 et, d'autre part, axialement à l'avant avec la face 72 du noyau 66 des moyens 28 de guidage.

La vanne 10 comporte un joint 78 d'étanchéité qui est monté dans une gorge 79 réalisée dans l'alésage 18 du corps 16 de vanne, ledit joint 78 coopérant avec la face 74 cylindrique externe de l'obturateur 20 et étant agencé axialement entre la chambre 22 de commande et la sortie 14.

De préférence, la partie de la face 74 cylindrique externe de l'obturateur 20 située axialement de part et d'autre de ladite ouverture 50 radiale de passage comporte un chanfrein 80.

Le chanfrein 80 permet notamment de préserver en fonctionnement le joint formant les moyens 40 d'étanchéité qui, dits principaux, sont destinés à assurer une étanchéité au fluide de soufflage haute pression entre l'entrée 12 et la sortie 14 de la vanne lorsque l'obturateur 20 occupe la première position de fermeture de la vanne.

Dans ce premier mode de réalisation, le joint 40 est monté dans une gorge 43 réalisée dans le corps 16 de vanne.

Avantageusement, la vanne 10 présente une course d'ouverture réduite pour faciliter la mise en communication rapide de l'entrée 12 et de la sortie 14 à travers ladite au moins une ouverture 50 radiale de passage de l'obturateur 20.

La vanne 10 comporte encore un joint 82 porté par l'insert 52 et monté dans une gorge 83 de la douille 54, ledit joint 82 coopérant avec la face 76 cylindrique interne de l'obturateur 20, ici une portion située axialement en arrière de l'ouverture 50 de passage.

La vanne 10 comporte différents moyens d'étanchéité associés à l'obturateur 20 pour assurer au moins l'étanchéité de la chambre 22 de commande, de la chambre 30 de rappel et de l'ouverture 50 de passage de l'obturateur 20 par rapport à la sortie 14.

De préférence, les moyens d'étanchéité sont portés par le corps 16 de vanne, l'insert 52 ou encore les moyens 28 de guidage de manière que l'obturateur 20 tubulaire présente radialement une épaisseur réduite, tout particulièrement au voisinage de ladite au moins une ouverture 50 de passage du fluide de soufflage haute pression dès lors que les surfaces orthogonales à l'axe X intervenant dans le phénomène de frein y sont situées.

De préférence, la vanne 10 comporte des moyens d'amortissement qui interviennent en fin de course lorsque l'obturateur 20 atteint au moins l'une desdites première position de fermeture de la vanne et deuxième position d'ouverture de la vanne.

Lesdits moyens d'amortissement sont par exemple formés par au moins une rondelle d'amortissement, telle qu'une rondelle en matière élastomère.

Dans le premier mode de réalisation, lesdits moyens d'amortissement comportent des premiers moyens 84 d'amortissement qui interviennent en fin de course lorsque, rappelé automatiquement par lesdits moyens 30 de rappel, l'obturateur 20 atteint ladite première position de fermeture de la vanne représentée à la figure 4.

Les premiers 84 moyens d'amortissement sont formés par une rondelle portée par l'insert 52 et contre laquelle la face 24 principale de l'obturateur 20 est susceptible de venir en butée.

Lesdits moyens d'amortissement comportent des deuxièmes moyens 86 d'amortissement qui interviennent en fin de course lorsque, déplacé par la mise en pression de la chambre 22 de commande, l'obturateur 20 atteint ladite deuxième position d'ouverture de la vanne.

Lesdits deuxièmes moyens 86 d'amortissement de l'obturateur sont interposés axialement entre la face 34 secondaire dudit obturateur 20 et sont portés par les moyens 28 de guidage.

De préférence, les moyens 28 de guidage associés à l'obturateur 20 comportent au moins une bague 88 de guidage, par exemple deux bagues 88 qui sont montées dans des rainures que comporte l'alésage 18 et agencées axialement de part et d'autre de la sortie 14 de la vanne 10.

Tel qu'expliqué en préambule, le « phénomène de frein » mis en évidence par la Demanderesse impacte de manière conséquente le temps de réponse d'une vanne 10 lors de l'ouverture et le but est de supprimer ou à tout le moins très fortement réduire ce phénomène.

Dans la vanne 10 selon le premier mode de réalisation, le fluide de soufflage haute pression est introduit axialement à l'intérieur de l'obturateur 20 tubulaire, par l'intermédiaire de l'insert 52 disposé à l'entrée 12 et circule suivant les flèches représentées sur les figures 4 à 6.

Lorsque l'obturateur 20 occupe la première position de fermeture de la vanne représentée à la figure 4, la circulation entre l'entrée 12 et la sortie 14 est interrompue dès lors que l'ouverture 50 radiale de passage située axialement en arrière est isolée de la sortie 14 par les moyens 40 d'étanchéité.

La force générée par le fluide de soufflage haute pression s'applique principalement sur la face 70 arrière convexe du noyau 66 formant un déflecteur apte à dévier radialement ledit fluide vers ladite au moins une ouverture 50 radiale de passage.

Le fluide de soufflage haute pression applique également une force F0 sur un tronçon axial de l'obturateur 20 qui est compris axialement entre le joint 83 d'étanchéité à l'extrémité avant de l'insert 52 et le joint 48 d'étanchéité à l'extrémité arrière du noyau 66, ladite force F0 étant orthogonale à l'axe X de coulissement de l'obturateur 20.

Par comparaison avec l'obturateur de la vanne 5 illustrée aux figures 1 à 3, l'obturateur 20 de la vanne 10 selon l'invention présente des surfaces orthogonales à l'axe X, lesdites surfaces appartenant au bord 90 qui délimite ladite au moins une ouverture 50 de passage du fluide de soufflage haute pression.

Par analogie, le bord 90 de l'ouverture 50 présente une surface 44 distale et une surface 46 proximale, respectivement orthogonales à l'axe X, sur lesquelles le fluide de soufflage haute pression est susceptible d'exercer des forces F1 et F2 antagonistes, respectivement orientées axialement vers l'arrière et vers l'avant.

Dans la première position de fermeture illustrée à la figure 4, la résultante des forces exercées par le fluide haute pression correspond à la force F0, F1 et F2 se neutralisant, les faces 44 et 46 dudit au moins un orifice 50 radial de passage sont à une pression identique.

Pour commander l'ouverture de la vanne, la chambre 22 de commande est mise sous pression en y introduisant le fluide de pilotage à basse pression.

Lorsque le fluide de pilotage sous pression présent dans la chambre 22 de commande exerce, sur la face 24 principale de l'obturateur 20, une force supérieure à celle exercée sur la face 34 par le fluide de pilotage présent dans la chambre 30 de rappel, l'obturateur 20 coulisse alors axialement de l'arrière vers l'avant.

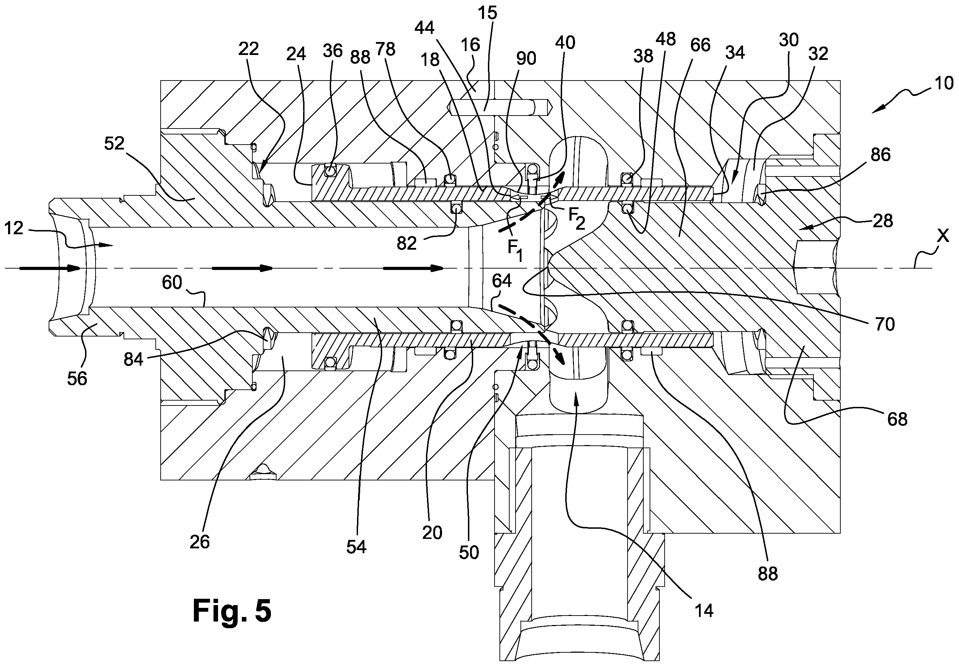

L'obturateur 20 quitte la première position de fermeture illustrée à la figure 4 et, tel qu'illustré par la figure 5, la mise en communication de l'entrée 12 avec la sortie 14 s'établit lorsque, ladite au moins une ouverture 50 dépasse axialement les moyens 40 d'étanchéité.

Le fluide de soufflage haute pression présent à l'intérieur de l'obturateur 20 commence alors à traverser ladite au moins une ouverture 50 en direction de la sortie 14 de la vanne 10.

Grâce à la forme tubulaire de l'obturateur 20, les surfaces 44 et 46 sont particulièrement réduites et par conséquent les forces F1 et F2 précitées qui déterminent le phénomène de frein le sont également.

Avantageusement, les surfaces 44 et 46 orthogonales à l'axe X sont notamment déterminées par l'épaisseur de l'obturateur 20 selon la direction radiale.

Avantageusement, ladite au moins une ouverture 50 de passage comporte un bord 90 dont les parties axialement opposées présentent une forme curviligne, par exemple circulaire, de manière à réduire lesdites surfaces 44 et 46 orthogonales à l'axe X.

Avantageusement, les surfaces 44 et 46 sont axialement proches l'une de l'autre ce qui participe à la réduction recherchée du phénomène de frein.

Avantageusement, les moyens d'étanchéité sont portés par les autres éléments comme l'insert 52, le corps 16 de vanne ou le noyau 66 des moyens de guidage de manière à réduire encore l'épaisseur de l'obturateur 20 du fait de l'absence de gorge destinée au montage d'un joint.

La course axiale d'ouverture est avantageusement réduite et la circulation du fluide de soufflage haute pression facilitée par l'absence de parcours sinueux, ledit fluide introduit axialement étant dévié radialement par la face 70 convexe directement vers ladite au moins une ouverture 50 radiale, soit vers la sortie 14.

Tel qu'illustré sur la figure 6, l'obturateur 20 comporte une pluralité d'ouvertures 50 radiales qui sont de préférence réparties circonférentiellement de manière régulière.

Chaque ouverture 50 radiale de passage présente ici une forme globalement circulaire, en variante d'autres formes géométriques sont cependant possibles.

Une vanne 10 selon la conception n'est dès lors pas ou peu affectée par le phénomène de frein et son temps de réponse à l'ouverture s'en trouve considérablement amélioré.

Bien entendu, le premier mode de réalisation représenté aux figures 4 à 6 ne constitue qu'un exemple de réalisation non limitatif.

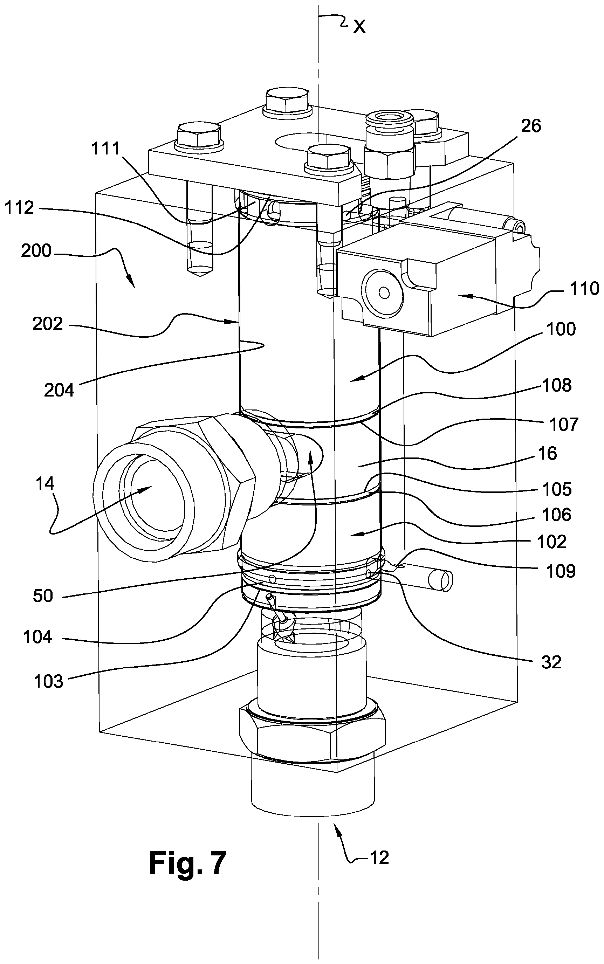

On décrira ci-après, par comparaison avec le premier mode de réalisation, un deuxième mode de réalisation d'une vanne 100, dite vanne-cartouche, et représentée aux figures 7 à 10.

Dans ce deuxième mode de réalisation, le corps 16 de vanne est constitué par un tube pour former une vanne-cartouche 100 qui est destinée à être introduite dans un bloc 200 d'une machine de fabrication de récipients.

La vanne-cartouche 100 se caractérise notamment par une compacité radiale et est destinée à être montée dans un logement 202 complémentaire du bloc 200.

Le bloc 200 comporte des moyens de raccordement fluidique pour relier l'entrée 12 à la source d'alimentation en fluide de soufflage haute pression et relier la sortie 14.

Avantageusement, le tube formant le corps 16 de vanne comporte des gorges annulaires qui sont ménagées dans une surface 102 cylindrique externe du corps de vanne.

Les gorges annulaires sont destinées au montage de moyens d'étanchéité pour assurer les étanchéités fonctionnelles nécessaires entre ladite vanne-cartouche 100 et une paroi 204 cylindrique interne du logement 202 du bloc.

La vanne-cartouche 100 comporte au moins un joint 104 monté dans une gorge 103 pour assurer l'étanchéité par rapport à l'alimentation en fluide de pilotage, par ledit au moins un orifice 32, de la chambre 30 de rappel de l'obturateur 20.

La vanne-cartouche 100 comporte au moins un joint 106 et un joint 108 respectivement montés dans une gorge 105 et une gorge 107 et agencés axialement de part et d'autre de la sortie 14.

Le bloc 200 comporte des moyens 110 d'alimentation en fluide de pilotage de la chambre 30 de rappel, d'une part, et de la chambre 22 de commande de l'obturateur 20, d'autre part. Lesdites chambres 22 et 30 sont respectivement alimentées grâce à des conduites réalisées dans le bloc 200.

Le bloc 200 comporte notamment une conduite 109 de liaison aux moyens 110 d'alimentation pour l'alimentation de la chambre 30 de rappel.

La vanne-cartouche 100 comporte au moins un joint 112 monté dans une gorge 111 pour assurer l'étanchéité par rapport à l'alimentation en fluide de pilotage, par ledit au moins un orifice 26 d'alimentation, de la chambre 22 de commande de l'obturateur 20.

De préférence, l'obturateur 20 de la vanne-cartouche 100 comporte une seule ouverture 50 radiale de passage du fluide de soufflage haute pression.

La vanne-cartouche 100 comporte des moyens 114 d'indexation angulaire de l'obturateur 20 par rapport au corps 16 de vanne de manière que ladite une ouverture 50 radiale de passage et la sortie 14 soient radialement alignées l'une avec l'autre lorsque l'obturateur 20 occupe axialement ladite deuxième position d'ouverture.

Les moyens 114 d'indexation angulaire sont par exemple formés par un pion qui, solidaire de l'obturateur 20, s'étend radialement pour coopérer par son extrémité libre avec une rainure axiale complémentaire ménagée dans l'alésage 18 du corps 16 de vanne.

La vanne-cartouche 100 diffère notamment de la vanne 10 selon le premier mode de réalisation par le fait que la position axiale dans la vanne de la chambre 22 de commande et de la chambre 30 de rappel est modifiée et cela par rapport respectivement aux moyens 28 de guidage comportant le noyau 66 et à l'insert 52.

Si l'on considère comme référence le fait que l'introduction axiale du fluide de soufflage haute pression par l'entrée 12 à l'intérieur de l'obturateur 20 s'effectue de l'arrière vers l'avant, alors le coulissement dudit obturateur 20 de la vanne-cartouche 100 s'effectue à l'ouverture, en sens inverse, soit de l'avant vers l'arrière par rapport à la vanne 10.

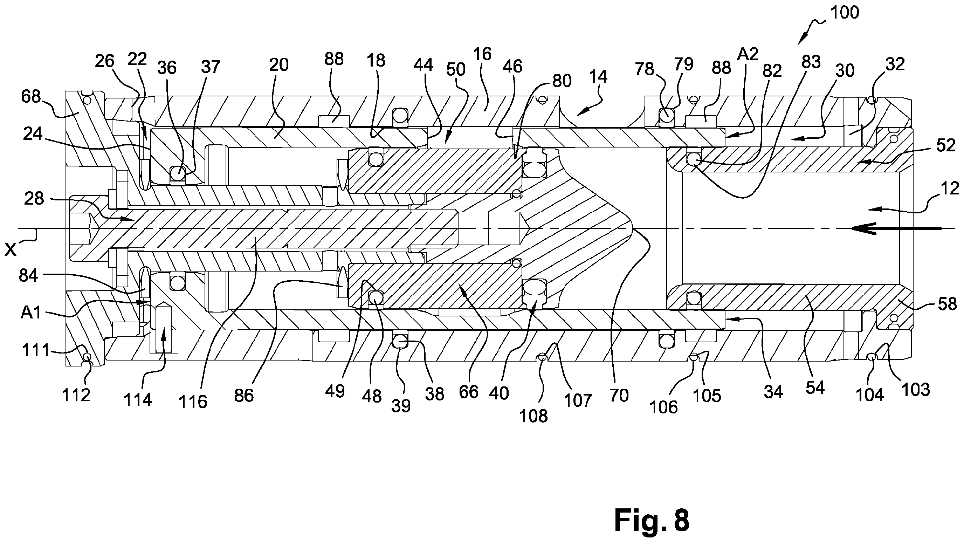

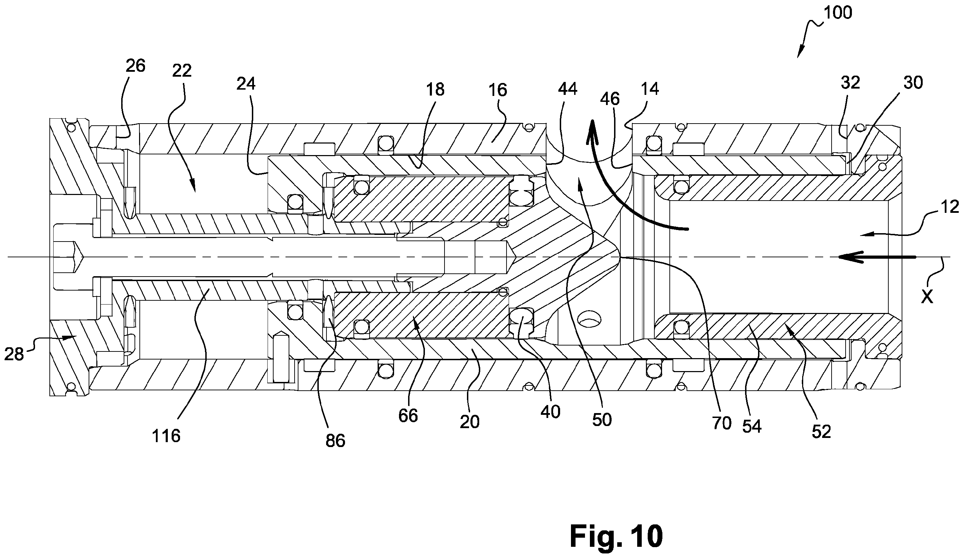

Par comparaison avec le premier mode de réalisation, le fluide de soufflage haute pression est introduit axialement dans la vanne-cartouche 100 en sens inverse par rapport à celui du coulissement de l'obturateur 20 depuis la première position de fermeture de la vanne illustrée à la figure 8 jusqu'à la deuxième position d'ouverture de la vanne illustrée à la figure 10.

Dans le premier mode de réalisation, la chambre 22 de commande de l'obturateur 20 s'étend circonférentiellement autour de la douille 54 de l'insert 52 et la chambre 30 de rappel de l'obturateur 20 circonférentiellement autour des moyens 28 de guidage, notamment du noyau 66.

Par comparaison dans la vanne-cartouche 100, la chambre 22 de commande de l'obturateur 20 s'étend circonférentiellement autour des moyens 28 de guidage et la chambre 30 de rappel de l'obturateur circonférentiellement autour de la douille 54 de l'insert 52.

Dans le deuxième mode de réalisation, la section active A1 de la face 24 principale de l'obturateur 20 est déterminée par le diamètre interne du tube formant le corps 16 de vanne en relation avec le diamètre externe d'une tige 116 des moyens 28 de guidage qui est reliée au noyau 66.

La section active A2 de la face 34 secondaire de l'obturateur 20 est déterminée par le diamètre interne du tube formant le corps 16 de vanne en relation avec le diamètre externe de la douille 54 de l'insert 52.

Par comparaison avec le premier mode de réalisation dans lequel les moyens 40 d'étanchéité sont portés par le corps 16 de vanne, le joint 40 étant monté dans une gorge 43 ménagée dans l'alésage 18 interne, les moyens 40 d'étanchéité selon le deuxième mode de réalisation sont portés par le noyau 66 des moyens 28 de guidage qui pénètre axialement à l'intérieur de l'obturateur 20.

Le corps 16 de vanne est avantageusement formé par un tube de faible épaisseur afin de réaliser une vanne-cartouche 100 qui soit compacte radialement.

Les moyens d'amortissement 84 et 86 associés à l'obturateur 20 de la vanne-cartouche 100 sont portés par les moyens 28 de guidage, plus précisément montés autour de la tige 116.

Tel qu'illustré sur la figure 8, le fluide de soufflage haute pression est introduit axialement à l'intérieur de l'obturateur 20 suivant la flèche de l'entrée 12 reliée à la source.

Plus précisément, le fluide de soufflage circule axialement dans le canal central d'alimentation délimité par la face 60 cylindrique interne de l'insert 52 comportant la douille 54 et une partie 58 de fixation avec le corps 16 de vanne.

Dans la première position de fermeture de la vanne, le fluide de soufflage haute pression exerce notamment une force sur la face 70 convexe du noyau 66 qui, comme dans le premier mode de réalisation, assure avantageusement la reprise des efforts.

Le fonctionnement de la vanne-cartouche 100 est analogue à celui de la vanne 10, la mise sous pression de la chambre 22 de commande par l'introduction du fluide de pilotage à travers l'orifice 26 d'admission provoque le coulissement axial de l'obturateur 20 depuis la première position de fermeture vers la deuxième position d'ouverture de la vanne.

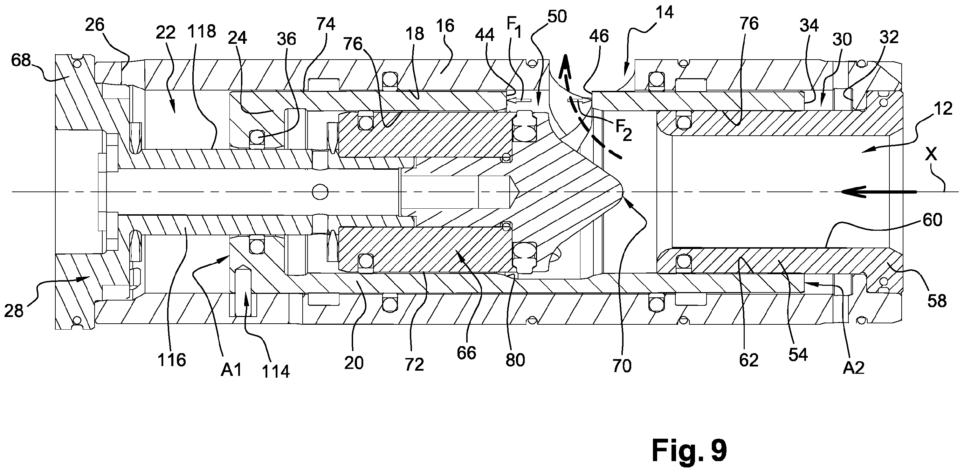

La figure 9 représente une position intermédiaire de l'obturateur 20 lors de la course d'ouverture.

La partie axiale avant de l'obturateur 20 portant le joint 36 monté dans une gorge 37 coopère avec une face 118 cylindrique externe de la tige 116 des moyens 28 de guidage tandis que la face 76 cylindrique interne de l'obturateur 20 coopère d'une part à l'avant avec la face 72 cylindrique externe du noyau 66 et, d'autre part, à l'arrière avec la face 62 cylindrique externe de la douille 54 de l'insert 52.

Lors du coulissement, la face 74 cylindrique externe de l'obturateur 20 coopère avec l'alésage 18 du corps 16 de la vanne-cartouche 100, avantageusement guidé extérieurement par ledit alésage 18 et une paire de bague 88 de guidage et intérieurement par le noyau 66, axialement à l'avant, et la douille 54, axialement à l'arrière.

Dans ce deuxième mode de réalisation, les surfaces 44 et 46 sont avantageusement réduites grâce notamment à l'obturateur 20 tubulaire de manière à réduire à tout le moins le « phénomène de frein », tel qu'expliqué précédemment.

La flèche en pointillé sur la figure 9 qui illustre l'établissement de la communication entre l'entrée 12 et la sortie 14 permet d'apprécier le parcours particulièrement direct et court suivi par le fluide de soufflage vers la sortie 14.

Le fluide de soufflage présent axialement à l'intérieur de l'obturateur 20 est avantageusement dévié radialement par la surface 70 convexe vers l'ouverture 50 radiale de passage qui est alignée radialement avec la sortie 14 grâce aux moyens 114 d'indexation angulaire.

L'obturateur 20 poursuit sa course jusqu'à atteindre la deuxième position d'ouverture illustrée à la figure 10, la fin de course de l'obturateur 20 est avantageusement amortie par la rondelle 86 d'amortissement montée autour de la tige 116 et bloquée axialement par le noyau 66.

La fermeture de la vanne-cartouche 100 est obtenue en cessant d'alimenter la chambre 22 de commande en fluide de pilotage et en alimentant à nouveau la chambre 30 de rappel.

Dès lors que l'effort de rappel appliqué sur la section A2 devient supérieur à l'effort d'actionnement appliqué jusqu'alors sur la section A1 de la face 34 principale par le fluide de pilotage de la chambre 22 de commande, l'obturateur 20 est automatiquement rappelé vers la première position de fermeture illustrée à la figure 8.

Avantageusement, la fin de course de fermeture de l'obturateur 20 est amortie par la rondelle 84 d'amortissement.

Tel qu'expliqué précédemment, lors de la fermeture de la vanne 10 ou de la vanne-cartouche 100, le « phénomène de frein » n'existe pas en raison du fait que la sortie 14 et l'entrée 12 sont à une même pression, celle du fluide de soufflage.

La vanne 10, 100 selon l'invention est susceptible d'application industrielle dans une machine de fabrication de récipients en matière plastique à partir de préformes chaudes mises en volume dans un moule, par soufflage ou par étirage-soufflage, au moyen d'au moins un fluide haute pression.

La vanne 10, 100 se caractérise par le fait que le fluide haute pression est introduit axialement à l'intérieur dudit obturateur 20 qui est de forme tubulaire et comporte au moins une ouverture 50 radiale de passage traversée par ledit fluide haute pression lorsque ledit obturateur 20 occupe la deuxième position d'ouverture de la vanne.

## Revendications

1. Vanne (10, 100) pour une machine de fabrication de récipients en matière plastique à partir de préformes mises en volume dans un moule, par soufflage ou par étirage-soufflage, au moyen d'au moins un fluide haute pression, ladite vanne (10) comportant au moins :
- une entrée (12) reliée à une source de fluide haute pression et une sortie (14) qui sont mises en communication sélectivement à travers un corps (16) de vanne comportant un alésage (18) interne dans lequel coulisse axialement un obturateur (20),
- une chambre (22) de commande de l'obturateur délimitée axialement par une face (24) principale de l'obturateur (20) et alimentée avec un fluide de pilotage pour provoquer le coulissement axial dudit obturateur (20) dans l'alésage (18) entre au moins une première position de fermeture et une deuxième position d'ouverture de la vanne,
- des moyens (28) de guidage de l'obturateur (20) comportant au moins une partie (66) qui pénètre axialement à l'intérieur dudit obturateur (20),
**caractérisée en ce que** l'obturateur (20) est formé par une pièce tubulaire à l'intérieur de laquelle le fluide haute pression est introduit axialement et **en ce que** l'obturateur (20) comporte au moins une ouverture (50) radiale de passage traversée par ledit fluide haute pression lorsque ledit obturateur occupe ladite deuxième position d'ouverture de la vanne.

2. Vanne selon la revendication 1, **caractérisée en ce que** l'entrée (12) comporte un insert (52) qui est solidaire d'une extrémité axiale du corps (16) de vanne et comporte au moins une partie (54) axiale qui pénètre axialement à l'intérieur dudit obturateur (20).

3. Vanne selon la revendication 2, **caractérisée en ce que** ladite partie axiale de l'insert (52) est conformée en une douille (54) dont une face (60) cylindrique interne délimite radialement au moins un canal central d'alimentation en fluide haute pression et dont une face (62) cylindrique externe constitue une surface de guidage axial avec laquelle coopère de manière étanche une partie axiale de l'obturateur (20).

4. Vanne selon l'une quelconque des revendications 1 à 3, **caractérisée en ce que** la vanne (10, 100) comporte des moyens (114) d'indexation angulaire de l'obturateur (20) par rapport au corps (16) de vanne de manière que ladite au moins une ouverture (50) radiale de passage et la sortie (14) soient alignées radialement l'une avec l'autre lorsque l'obturateur (20) occupe axialement ladite deuxième position d'ouverture.

5. Vanne selon l'une quelconque des revendications 1 à 4, **caractérisée en ce que** ladite au moins une partie axiale des moyens (28) de guidage de l'obturateur (20) est un noyau (66) comportant une face (70) convexe conformée pour dévier radialement le fluide haute pression vers la sortie (14).

6. Vanne selon l'une quelconque des revendications 1 à 5, **caractérisée en ce que** la vanne (10, 100) comporte des moyens de rappel de l'obturateur (20) qui sont formés par une chambre (30) de rappel alimentée en fluide de pilotage de manière à rappeler automatiquement ledit obturateur (20) vers la première position de fermeture de la vanne.

7. Vanne selon la revendication 6, **caractérisée en ce que** ladite chambre (30) de rappel est délimitée par une face (34) secondaire de l'obturateur (20), axialement opposée à ladite face (24) principale de l'obturateur (20) délimitant la chambre (22) de commande.

8. Vanne selon la revendication 7, **caractérisée en ce que** la face (24) principale de l'obturateur (20) associée à la chambre (22) de commande présente une section active (A1) qui est supérieure à la section active (A2) de la face (34) secondaire de l'obturateur (20) associée à la chambre (30) de rappel.

9. Vanne selon l'une quelconque des revendications précédentes, **caractérisée en ce que** le corps (16) de vanne est constitué par un tube pour former une vanne-cartouche (100) qui est destinée à être introduite dans un logement (202) complémentaire d'un bloc (200) d'une machine de fabrication de récipients.

10. Vanne selon la revendication 9, **caractérisée en ce que** le tube formant le corps (16) de vanne comporte des gorges (103, 105, 107, 111) annulaires qui, ménagées dans une surface (102) cylindrique externe du corps (16) de vanne, sont destinées au montage de moyens (104, 106, 108, 112) d'étanchéité pour assurer les étanchéités entre ladite vanne-cartouche (100) et une paroi (204) cylindrique interne du logement (202) du bloc.

## Patentansprüche

1. Ventil (10, 100) für eine Maschine zur Fertigung von Behältern aus Kunststoffmaterial aus Vorformen, die durch Blasen oder durch Streckblasen mittels zumindest eines Hochdruckfluids in einer Gießform aufgerichtet werden, wobei das Ventil (10) zumindest Folgendes aufweist:
- einen mit einer Hochdruckfluidquelle verbundenen Eingang (12) und einen Ausgang (14), die über einen Ventilkörper (16), der eine Innenbohrung (18) aufweist, in der ein Verschlusselement (20) axial gleitet, selektiv in Verbindung gebracht werden;
- eine Kammer (22) zum Steuern des Verschlusselements, die axial durch eine Hauptfläche (24) des Verschlusselements (20) begrenzt ist und mit einem Steuerfluid versorgt wird, um das axiale Gleiten des Verschlusselements (20) in der Bohrung (18) zwischen zumindest einer ersten Schließstellung und einer zweiten Öffnungsstellung des Ventils zu bewirken,
- Mittel (28) zum Führen des Verschlusselements (20), die zumindest einen Teil (66) aufweisen, der axial in das Innere des Verschlusselements (20) ragt,
**dadurch gekennzeichnet, dass** das Verschlusselement (20) durch ein Rohrstück ausgebildet ist, in dessen Inneres das Hochdruckfluid axial eingeführt wird, und dass das Verschlusselement (20) zumindest eine radiale Durchgangsöffnung (50) aufweist, die vom Hochdruckfluid durchströmt wird, wenn das Verschlusselement die zweite Öffnungsstellung des Ventils einnimmt.

2. Ventil nach Anspruch 1, **dadurch gekennzeichnet, dass** der Eingang (12) einen Einsatz (52) aufweist, der mit einem axialen Ende des Ventilkörpers (16) fest verbunden ist und zumindest einen axialen Teil (54), der axial in das Innere des Verschlusselements (20) ragt, aufweist.

3. Ventil nach Anspruch 2, **dadurch gekennzeichnet, dass** der axiale Teil des Einsatzes (52) als eine Hülse (54) ausgebildet ist, deren eine innere Zylinderfläche (60) zumindest einen zentralen Hochdruckfluidversorgungskanal radial begrenzt und deren eine äußere Zylinderfläche (62) eine axiale Führungsfläche bildet, mit der ein axialer Teil des Verschlusselements (20) dicht zusammenwirkt.

4. Ventil nach einem der Ansprüche 1 bis 3, **dadurch gekennzeichnet, dass** das Ventil (10, 100) Mittel (114) zur Winkelindexierung des Verschlusselements (20) in Bezug auf den Ventilkörper (16) aufweist, sodass die zumindest eine radiale Durchgangsöffnung (50) und der Ausgang (14) radial zueinander ausgerichtet sind, wenn das Verschlusselement (20) axial die zweite Öffnungsstellung einnimmt.

5. Ventil nach einem der Ansprüche 1 bis 4, **dadurch gekennzeichnet, dass** der zumindest eine axiale Teil der Mittel (28) zum Führen des Verschlusselements (20) ein Kern (66) ist, der eine konvexe Fläche (70) aufweist, die dazu ausgebildet ist, das Hochdruckfluid radial zum Ausgang (14) abzulenken.

6. Ventil nach einem der Ansprüche 1 bis 5, **dadurch gekennzeichnet, dass** das Ventil (10, 100) Mittel zum Zurückstellen des Verschlusselements (20) aufweist, die durch eine mit Steuerfluid versorgte Rückstellkammer (30) so ausgebildet sind, dass das Verschlusselement (20) automatisch in die erste Schließstellung des Ventils zurückgestellt wird.

7. Ventil nach Anspruch 6, **dadurch gekennzeichnet, dass** die Rückstellkammer (30) durch eine sekundäre Fläche (34) des Verschlusselements (20) begrenzt ist, die der Hauptfläche (24) des Verschlusselements (20), welche die Steuerkammer (22) begrenzt, axial gegenüberliegt.

8. Ventil nach Anspruch 7, **dadurch gekennzeichnet, dass** die mit der Steuerkammer (22) verbundene Hauptfläche (24) des Verschlusselements (20) einen aktiven Abschnitt (A1) aufweist, der größer als der aktive Abschnitt (A2) der sekundären Fläche (34) des mit der Rückstellkammer (30) verbundenen Verschlusselements (20) ist.

9. Ventil nach einem der vorangehenden Ansprüche, **dadurch gekennzeichnet, dass** der Ventilkörper (16) aus einem Rohr zum Ausbilden eines Kartuschenventils (100) gebildet ist, das dazu bestimmt ist, in eine komplementäre Aufnahme (202) eines Blocks (200) einer Maschine zur Fertigung von Behältern eingesetzt zu werden.

10. Ventil nach Anspruch 9, **dadurch gekennzeichnet, dass** das den Ventilkörper (16) ausbildende Rohr ringförmige Nuten (103, 105, 107, 111) aufweist, die, in einer äußeren Zylinderfläche (102) des Ventilkörpers (16) angeordnet, für die Montage von Dichtungsmitteln (104, 106, 108, 112) zur Gewährleistung der Abdichtung zwischen dem Kartuschenventil (100) und einer inneren Zylinderwand (204) der Aufnahme (202) des Blocks bestimmt sind.

## Claims

1. Valve (10, 100) for a machine for manufacturing plastic containers from preforms that are expanded in a mould, by blow moulding or by stretch-blow moulding, by means of at least one high-pressure fluid, said valve (10) comprising at least:
- an inlet (12) connected to a high-pressure fluid source and an outlet (14), which are brought into communication selectively via a valve body (16) comprising an internal bore (18) in which an obturator (20) slides axially,
- a chamber (22) for controlling the obturator, which chamber is delimited axially by a principal face (24) of the obturator (20) and is supplied with a control fluid to cause said obturator (20) to slide axially in the bore (18) between at least one first, valve closing position and one second, valve opening position,
- means (28) for guiding the obturator (20), comprising at least one portion (66) that penetrates axially inside said obturator (20),
**characterized in that** the obturator (20) consists of a tubular part into which the high-pressure fluid is introduced axially, and **in that** the obturator (20) comprises at least one radial passage opening (50) through which said high-pressure fluid passes when said obturator is in said second, valve opening position.

2. Valve according to Claim 1, **characterized in that** the inlet (12) comprises an insert (52) that is secured to an axial end of the valve body (16) and comprises at least one axial portion (54) that penetrates axially inside said obturator (20).

3. Valve according to Claim 2, **characterized in that** said axial portion of the insert (52) is in the form of a sleeve (54), of which an internal cylindrical face (60) delimits radially at least one central duct for supplying high-pressure fluid, and of which an external cylindrical face (62) constitutes an axial guiding surface with which an axial portion of the obturator (20) cooperates in a sealing manner.

4. Valve according to any one of Claims 1 to 3, **characterized in that** the valve (10, 100) comprises means (114) for angular indexing of the obturator (20) with respect to the valve body (16) such that said at least one radial passage opening (50) and the outlet (14) are aligned radially with one another when the obturator (20) occupies, axially, said second, opening position.

5. Valve according to any one of Claims 1 to 4, **characterized in that** said at least one axial portion of the means (28) for guiding the obturator (20) is a core (66) comprising a convex face (70) that is formed to radially redirect the high-pressure fluid to the outlet (14).

6. Valve according to any one of Claims 1 to 5, **characterized in that** the valve (10, 100) comprises return means for the obturator (20) that are formed by a return chamber (30) which is supplied with control fluid so as to automatically return said obturator (20) to the first, valve closing position.

7. Valve according to Claim 6, **characterized in that** said return chamber (30) is delimited by a secondary face (34) of the obturator (20), at the axially opposite end from said principal face (24) of the obturator (20) delimiting the control chamber (22).

8. Valve according to Claim 7, **characterized in that** the principal face (24) of the obturator (20), associated with the control chamber (22), has an active cross-sectional area (A1) that is greater than the active cross-sectional area (A2) of the secondary face (34) of the obturator (20) associated with the return chamber (30).

9. Valve according to any one of the preceding claims, **characterized in that** the valve body (16) consists of a tube for forming a cartridge valve (100) that is designed to be introduced into a matching recess (202) of a block (200) of a machine for manufacturing containers.

10. Valve according to Claim 9, **characterized in that** the tube forming the valve body (16) comprises annular channels (103, 105, 107, 111) which, created in a cylindrical outer surface (102) of the valve body (16), are designed for installing sealing means (104, 106, 108, 112) in order to ensure the seals between said cartridge valve (100) and a cylindrical internal wall (204) of the recess (202) of the block.
